# EUROPEAN PATENT SPECIFICATION

(11) **EP 2 862 778 B1**
(45) Date of publication and mention of the grant of the patent: **04.01.2017**
(21) Application number: 13188754.9
(22) Date of filing: 15.10.2013
(51) Int. Cl.: B61L 1/14, B61L 1/16, B61L 23/04, B61L 27/00, G01D 21/02, G01D 3/08

(54) **Method for generating measurement results from sensor signals**
Verfahren zur Erzeugung der Messergebnisse aus Sensorsignalen
Procédé pour la génération de résultats de mesure à partir de signaux de détecteur

(43) Date of publication of application: 22.04.2015
(73) Proprietor: Bayern Engineering GmbH & Co. KG, 83043 Bad Aibling (DE)
(72) Inventor: Kühbandner, Erich, 83043 Bad Aibling (DE); Warzecha, Volker, 83043 Bad Aibling (DE)
(74) Representative: Huebner, Stefan Rolf

(56) References cited:
- EP-A1- 1 239 268
- WO-A1-2011/027166
- CA-A1- 2 242 723
- DE-U1-212006 000 003
- GB-A- 2 479 900
- JP-A- H08 334 560

## Description

### Field of the invention

The invention relates to a method for generating measurement results from sensor signals generated by one or more separate sensors, the signals comprising two or more data points, the sensors each being arranged at a rail adapted to carry a rail vehicle, the sensors being adapted to measure a physical property of the rail, and the sensors each comprising a transmitter adapted to transmit sensor signals to a physically distanced data management arrangement comprising a receiver adapted to receive sensor signals, a processor adapted to evaluate sensor signals, and a memory, the method comprising the steps of receiving sensor signals, evaluating sensor signals, and storing generated measurement results.

The invention further relates to a data acquisition and management system adapted to generate measurement results from sensor signals generated by one or more separate sensors, each arranged at a rail adapted to carry a rail vehicle, the sensors being adapted to measure a physical property of the rail, and the sensors each comprise a transmitter adapted to transmit sensor signals to a data management arrangement, physically distanced from the sensors and comprising a receiver adapted to receive sensor signals and a processor adapted to evaluate sensor signals and to generate measurement results.

### Background of the invention

Known is for example the combination of weight sensors and strain sensors as is for example disclosed in the utility model DE 21 2006 000 003 U1. This document describes an Ethernet network rail weighing apparatus which connects plural pairs of plate type sensors which are mounted underneath a railway track to shearing force sensors by an Ethernet network. The measurement data is then transmitted to a computer in a control room.

Further it is known from JP 2009 184450 A to inform passengers about the traffic situation of public transport facilities such as a bus or a train, by detecting the weight of a vehicle by means of weight sensors which are mounted to the vehicle, transmit the weight information to a server and relate the weight information to the number of passengers using the vehicle. The traffic situation can then be sent to a passenger's mobile device such as a cell phone.

From CN 1831496 it is known to remotely monitor the output of coal mines by transmitting the weight information from a dynamic railroad track scale wirelessly to a monitoring center. Here, the sensor data is processed by a CPU before it is transmitted to the monitoring center.

JP 2005 156298 A discloses a wheel load and lateral force measuring device comprising semiconductor sensors, a data processing unit and a wireless transmitter. Since the data processing part inside the sensor units calculates the wheel load and the lateral force, data processing on the receiver side can be reduced.

EP 1239268 A1 reveals a network aided weighing system comprising weighing arrangements with weight sensing means and transceiver means that transmit the weight information to an information network where the weight information is stored, managed and communicated to users though a wired or wireless network. The information can be displayed in mobile devices. The weighing arrangement and the network communicate in both directions. When weight information is transmitted to the network, the network can return a receipt or control secondary functions of the weighing arrangements.

A railway hazard vibration sensing, locating, and alarm system is disclosed in the Canadian patent application CA 2 424 723 A1. The system comprises acoustic sensors attached to a rail. Acoustic signals caused by foreign objects interacting with the rail are analysed and processed. By comparing the recorded acoustic signatures with known hazardous events, potential hazards are detected, and a warning signal can be transmitted. By comparing signals from several sensors, the location of the source can be determined.

The Japanese patent application JP H08 334560 A discloses a detection apparatus which detects sound waves or vibrations generated by an object to be detected. The apparatus comprises a feature extraction part which extracts a feature of a detected waveform and a judgement part outputs approach detection information on the train when the signal waveform agrees with a monitoring waveform.

The UK patent application GB 2479900 A discloses a method of initialising a rail signalling system for a rail network. Train locations are detected and stored in a database and sent to signalling communication equipment.

### Problem to be solved by the invention

It is an object of the present invention to provide an improved method for generating measurement results from sensor signals. For instance, a method shall be provided, which allows reevaluation and recalibration of sensor signals using one or more previously measured sensor signals from one sensor or signals from two or more different sensors.

It is also an object of the present invention to provide an improved data acquisition and management system. A further aim of the invention is to widely eliminate data processing requirements in or close to the sensor, thus saving space and reducing energy consumption at the location of the sensor.

### Solution according to the invention

According to the invention, the problem is solved by a method for generating measurement results from sensor signals according to the preamble of claim 1, wherein the two or more data points of each signal are from the same event, an event being a train-event, car-event and/or wheel-event.

Storing received sensor signals in the DMA advantageously allows carrying out and/or repeating the evaluation of sensor signals at a later point in time. The step of evaluating the sensor signals in the DMA by comparing and/or combining at least two data points from one or more stored sensor signals, advantageously allows decoupling the creation of measurement results from the creation of sensor signals. The method thus gives a much greater flexibility in creating measurement results from sensor signals. For example, it becomes possible to gain information about the historical and/or statistical evolution of sensor signals from one or more sensors.

A rail vehicle, in the sense of the present invention, is any kind of vehicle that may travel on a railway track comprising at least one rail and being carried by the rail. Such a rail vehicle (in the following also referred to as merely a "vehicle") is a rail car, a locomotive, a lorry, a trolley, a tram, a subway a rack railway, cog railway or a train set formed by a plurality of rail cars and a locomotive or a multiple unit train comprising at least one self-propelled rail car. Rail vehicles may transport passengers and/or cargo. The invention concerns rail vehicles that are used outdoors and/or indoors such as rail-bound warehouse transport systems. Said rail vehicles are carried and guided by rails forming a rail track. A rail vehicle is either hanging from a rail track or driving on a rail track. A rail track is formed by one, two, three or more rails. Thus, the invention concerns monorail systems as well as rail systems with a third rail such as a cog or rack rail which are used in mountain ranges, or subway rail systems where a third rail provides electrical power to the train, as long as at least one of the rails is adapted to carry the vehicle. Most common are rail tracks formed by two rails running in parallel. Rails are usually made of metal. Most common are railroad rails made from steel. The invention however is not limited to a particular kind of rail.

According to the invention, a sensor is a device adapted to measure a physical property of the rail. Notably, a sensor measures a change of a physical property of the rail caused by a rail vehicle supported by the rail during an event. A sensor can also be adapted to measure more than one physical property of the rail, for example a deformation of the rail caused by a rail vehicle and an acceleration of the sensor mounted to the rail. Measuring a physical property of the rail means that the sensor generates time-dependent electrical signals, for example time-dependent voltage or current signals, which represent the evolution of the measured physical property over time.

For the purpose of the invention, a "sensor signal" is a representation of the time-dependent electrical signal from which the originally measured physical property can be derived. This means that also a converted sensor signal still constitutes a sensor signal. Conversion of sensor signals is: amplification of sensor signals, analog-to-digital conversion, data compression, and/or generating a parametrization of a sensor signal. The conversion of sensor signals is carried out locally in the sensor and/or in the DMA. For that purpose a preferred sensor comprises means for signal conversion, such as an amplifier, an A/D-converter and/or a processor. More preferably, the conversion can also be carried out in a separate device and/or at the receiving DMA. In particular, a "stored sensor signal" can be a converted "received sensor signal" and a "received sensor signal" can be a converted "generated sensor signal".

Each sensor signal comprises at least two data points from the same event. Data points are measured values at specific and known - at least in relation to each other - points in time or parameters of a function, for example the amplitude or frequency of an oscillation, from which the originally measured physical property or the time-dependent electrical signal can be derived or approximated.

The event is: a train-event, a car-event or a wheel-event. A train event occurs when a train passes by a sensor, a car-event occurs when a rail car or locomotive, either as a single rail vehicle or as part of a train set, passes by a sensor, and a wheel event occurs when one or more wheels of one axle of a rail vehicle passes by a sensor. From this definition it follows that a train-event comprises a series of at least two car-events and a car-event typically comprises a series of at least two wheel-events. During an event a sensor generates a sensor signal. The sensor signal created during a train-event can be converted into at least two car-event sensor signals. Each car-event sensor signal can in turn be converted into at least two wheel-event sensor signals. Reversely it is also possible to create a car-event sensor signal from at least two wheel-event sensor signals or to create a train-event sensor signal from at least two car-event sensor signals. Since each sensor signal comprises at least two data points, a sensor signal generated in a car-event comprises at least four data points and a sensor signal generated in a train-event comprises at least eight data points. Since each data point was generated at a known point in time, an event is represented by a time series of data points. Preferably, a sensor signal comprises more than ten data points, more preferably more than 100, even more preferably more than 1000 data points.

A measurement site is the location where one or more sensors are arranged at the rail, for example at the lateral side of the rail or the bottom of the rail, and/or at a support structure of the rail or rail track. The sensor can for example be adapted to measure a mechanical deformation of the rail caused by the load of a rail vehicle bearing on the rail. The load can for example be a static force, such as the gravitational force originating from the heavy mass of the rail vehicle, and/or a dynamic force, for example caused by the motion of the rail vehicle along the rail, which can also cause vibrations in the rail. According to the invention one or more separate sensors are used. In case of more than one sensor each sensor shall be arranged at a rail. Here, a rail may refer to different sections of the same rail which may be distanced close or far apart in a geographical sense or it may refer to different rails which are not connected to each other or not even part of the same rail network.

A sensor can for example measure the weight of a rail vehicle, which is the force acting on the rail vehicle due to gravity and is proportional to the mass of the rail vehicle. Since the rail vehicle is carried by a rail, the force acts on the rail but can be influenced by the motion of the rail vehicle and/or the orientation of the rail itself which is not always exactly perpendicular to the direction of the gravitational force. Pairs of rails are often slightly inclined towards each other in order to center the rail vehicle. Furthermore, the weight is distributed over several wheels of the rail vehicle. Such additional effects have to be taken into account in order to determine the mass of a rail vehicle. A measurement of the weight of the rail vehicle thus involves measuring the force of the rail vehicle bearing on the rail. However, the desired physical quantity is the mass of the rail vehicle. In the present document the term weight is used for the gravitational force caused by a heavy mass. In order to determine the mass from a weight measurement, complex calculations may be needed. These calculations can require powerful computer processors and can also involve one or more data banks that provide parameters needed to execute a calibration algorithm or are adapted to store measurement data.

A transmitter is a device that sends signals and a receiver is a device that receives signals. A medium is arranged between transmitter and receiver allowing the signals to propagate between the transmitter and the receiver. According to the invention, a medium can be a network, a direct wired connection or a wireless connection. Possible networks are for example the internet, a cellular network system or other wireless networks. Communication between transmitter and receiver may also be facilitated by copper cables or optical fibers.

According to the invention, a memory is a physical device adapted to store information and facilitate the read out of information. Information includes sensor signals, computer programs and algorithms. Memory can include volatile or permanent memory or a combination of both. For example a memory device can be a computer hard drive, a flash memory, RAM, a CPU cache or any combination thereof. A processor according to the invention is a microprocessor, for example a CPU of a computer.

The data management arrangement (DMA) can be viewed as a server that receives sensor signals, stores the received sensor signals in a memory and evaluates and/or analyses the stored sensor signals and thus generates measurement results. Evaluation and/or analysis of sensor data is carried out in a processor. According to the invention, the DMA is physically distanced from the sensors. "Physically distanced" means that the DMA is not in direct physical contact with the sensors except for means that transmit signals from the sensors to the DMA, such as for example a wire or cable. In particular, the sensors and the DMA are not fixated to each other in any way, for example by being mounted to the same circuit board. It is preferred that sensors and DMA have separate housings and separate power supplies. It is preferred that the DMA is distanced at least several tens of meters away from the sensors. Typically, the DMA is distanced several tens of kilometers away from the sensors but may still be receiving signals from the sensors by a wired connection. Information is exchanged between sensors and the DMA in the form of sensor signals which may also contain metadata associated with the sensor signals. In particular, a sensor measures and transmits signals independently of the existence of a DMA. A sensor may be adapted to continuously generate and transmit sensor signals independently of the presence of a rail vehicle or the sensor may include electronic components that detect a threshold value and then trigger the transmission of sensor signals. Also it may be possible to detect an approaching rail vehicle by other means and trigger the measuring and transmission of sensor signals. Preferably, a wireless connection exists between the sensors and the DMA. Alternatively or in addition a physical connection may exist between a sensor and the DMA in the form of a wired network connection. A preferred DMA is a computer system connected to the internet, preferably also receiving sensor signals through the internet connection.

According to the invention, generating a measurement result involves several steps. First data is collected at the DMA by receiving sensor signals from one or more sensors. Then, after storing the sensor signals into memory, the sensor signals are evaluated and/or analyzed and may also be interpreted. According to the invention, the quantitative and/or qualitative evaluation and/or analysis and/or interpretation of sensor signals is referred to as "evaluation" of sensor signals, the outcome of which can be a measurement result. The DMA evaluates sensor signals by means of computer programs, algorithms, operations and/or other instructions, for example in the form of computer code comprising mathematical operations or look-up tables. A measurement result may be the original physical property which was measured by a sensor or it can be a derived quantity. For example, the measurement result evaluated from a sensor signal generated by a sensor may be the deformation of a rail caused by a rail vehicle or, derived from that, the mass of the rail vehicle itself. From the same sensor signal and/or a set of sensor signals or data points, it may be possible to extract numerous different physical quantities. For example, the frequency spectrum of a signal can be obtained by executing a Fourier transformation, yielding information about the vibration of the rail caused by a rail vehicle, thereby making it possible to even gain information about the cargo and/or cargo distribution of a rail vehicle or an imbalance of a wheel of a rail vehicle. Furthermore, the evaluation of sensor signals can for example generate a calibration function for a sensor. Evaluation of sensor signals may also include regrouping or rearranging data points of a sensor signal and/or carrying out a statistical analysis of data points and/or sensor signals.

According to the invention, comparing and/or combining two or more data points from one or more sensor signals with each other means carrying out one or more operations, each using two or more data points as input arguments and creating one or more measurement results. An operation is a mathematical or logical operation that uses at least the two or more data points as input arguments and that can be carried out by the processor of the DMA. The processes of displaying or plotting data points, for example in a table or a computer screen, are not operations in the sense of the invention. Preferably, one or more operations are implemented as a computer algorithm or program, for example an algorithm that fits an analytical function to the data points, the generated output of that algorithm being the resulting parameters of the fit function. The two or more data points may have been generated by the same sensor or by two or more different sensors. In particular, the two data points may originate from two different sensors, meaning that one data point from one sensor is compared and/or combined with one data point from another sensor. Sensor signals may come from measuring a physical property of a rail interacting with the same rail vehicle or with two or more different rail vehicles. Data points may be compared and/or combined quantitatively or qualitatively.

Comparing data points can include calculating the ratio or difference of two or more data points. Combining data points can include calculating the product or sum of two or more data points. In particular, the DMA may calculate the arithmetic mean of two data points. The data used in this step can be any two or more data points stored in the DMA. For example, the data points from a newly received sensor signal may be compared to one or more data points from historical sensor signals wherein all the sensor signals were generated by the same sensor. Alternatively, data points from sensor signals generated by two or more sensors may be compared to each other. This way, it can be possible to improve the accuracy of a measurement or to eliminate systematic errors.

Since sensor signals are stored in the memory of the DMA, the evaluation can be carried out ex post. However, sensor signals are not necessarily stored in the same form as they have been received by the DMA. It can be advantageous to convert the received signals before they are stored. For example, received sensor signals may be compressed in order to reduce the size of the sensor signals or metadata may be added before storing the signals. This means that the evaluation can be repeated at a later point in time. It is then not necessary to store measurement results. However, it is preferred that the DMA is adapted to store measurement results along with sensor signals. Measurement results may then be accessed directly when needed and do not have to be computed again from sensor signals. This may simplify combining and or comparing two or more measurement results with each other. Such an evaluation of a measurement result creates a new measurement result which can again be stored in the memory.

For example, the DMA can look up a previous measurement result (for example tare weight of a rail vehicle) calculated from a sensor signal and compare it to a new measurement result (for example gross weight of a vehicle) calculated from a sensor signal coming from the same (or different) sensor in order to calculate a new derived measurement result (for example net weight of a rail vehicle) by combining and/or comparing the stored measurement results or sensor signals.

An advantage of the present invention is achieved by the separation of tasks between the sensors and the DMA. The task of a sensor is to generate sensor signals and transmit them to the DMA. The task of the DMA is to receive sensor signals, store the sensor signals and perform ex post data analysis and calculate measurement results from said sensor signals. Through this separation, the sensors can be very simple and cheap devices that may need little maintenance and may be easy to install. Using such sensors may therefore be very economic. The DMA on the other hand may be located far away from the sensors at a location that is very suitable for data processing. A location may be suitable due to its protection against heat and/or seismic influences. The centralization of the signal evaluation may allow upgrading the system for example to the latest and most powerful processors available without changing the sensors. Also it may facilitate updating software operated by the DMA including data processing algorithms at a single location. This way it is achievable to generate new measurement results from stored sensor signals by applying new algorithms, which were not yet known at the time when the sensor signals were generated. Furthermore the invention simplifies storing sensor signals as well as the measurement results centrally. This may allow making the measurement results and/or the sensor signals easily accessible to a user of the system.

The problem is further solved by a data acquisition and management system (DAMS) according to the preamble of claim 6. According to the invention at least one sensor is adapted to measure a change of a magnetic property of a rail caused by a rail vehicle bearing on the rail.

### Preferred embodiments of the invention

In a preferred method for generating measurement results the evaluation of the sensor signals in the data management arrangement comprises a step in which two or more data points are combined and/or compared with each other, wherein the two or more data points are from sensor signals that were generated in different points in time.

In one embodiment of the invention, the two sensor signals that were generated in different points in time are associated with two different events, preferably two wheel event, more preferably two car events, even more preferably two train events. In another embodiment of the invention, the two sensor signals are generated in the same event but by two different sensors. Preferably, if the two sensor signals are generated by two different sensors, the two sensors are distanced from each other in the direction of travel of a rail vehicle along a rail such that the same event causes the sensors to generate signals in different points in time. Preferably, the different points in time are distanced by at least the inverse sampling rate of the sensor or both sensors in order to be distinguishable. For example, if the sampling rate of the two sensors is 1 kHz, the different points in time have to be separated by at least 1 ms. More preferably, the sampling rate is 1 Hz and the different points in time are separated by at least 1s.

In a preferred embodiment, an event, two or more data points of which are comprised in the signal, is a train-event, more preferably a car-event and even more preferably a wheel-event. It is preferred that an event has a pre-defined length in time and is triggered by an approaching rail vehicle. A preferred event has a minimum duration of one second, more preferably tens of seconds, even more preferably a minute. Preferably an event is triggered when a signal of a sensor is greater than a pre-defined threshold. For this purpose, a preferred sensor comprises electronics that is adapted to compare the generated signal or individual data points to a pre-defined threshold value. More preferably an event has a variable length in time during which a sensor generates a signal greater than or between two pre-defined threshold values. In a preferred embodiment of the invention, an event is triggered by a photoelectric barrier, which senses a rail vehicle passing by or approaching a sensor or a measurement site. Preferably a measurement site is arranged between two photoelectric barriers adapted to create a start signal, for example when a train passes the first barrier, and a stop signal, for example when the last rail car of the train leaves the second barrier, for an event. In a preferred method, a sensor generates a signal comprising more than ten, preferably more than one hundred, even more preferably more than one thousand data points during each event. Preferably, a sensor measures an event with a sampling rate of at least 10 data points per second, more preferably 100 data points per second, even more preferably 1000 data points per second.

According to a preferred embodiment, the method comprises a step in which at least one of the at least two data points of the one or more stored sensor signals which are compared and/or combined with each was generated by a calibrated sensor. This evaluation is carried out by a data management arrangement (DMA) which comprises a memory and a processor. It is preferred that the signal of the calibrated sensor is also stored in the memory of the DMA. The result of this step may be a calibration function for the sensor that generated the stored sensor signal with which the signal of the calibrated sensor is compared. It is preferred that both of the signals, the stored sensor signal and the signal from the calibrated sensor, were generated in a measurement of a rail vehicle with equal mass. Even more preferred, the same rail vehicle is measured. The two measurements may be carried out with a large distance in time and/or space. In a preferred embodiment, the resulting calibration function may be stored in the memory of the DMA for future evaluation of sensor signals. It is preferred that the DMA may compare a historic measurement result or calibration function of a specific sensor with measurement results from newer sensor signals in order to verify that a sensor is still calibrated within its required margin of error. An advantage of this method may be that sensor drifts can be detected and a required new calibration of a sensor may be initiated.

It is preferred that the data management arrangement receives sensor signals as primary data. According to the invention, primary data are sensor signals, whose data points have not been compared and/or combined with data points from other sensor signals yet. In a preferred embodiment of the invention, the sensor signals are converted at the sensor into a mode processible by the transmitter. Receiving sensor signals as primary data may have the advantage that the sensors do not need to be equipped with signal processors. Thus, the sensors can be simple and cheap devices which only need a transmitter in order to send the primary data to the DMA. Another advantage may be that the primary data may be stored in the memory of the DMA for reevaluation at a later point in time. For example, by comparing data points from historic sensor signals to data points from newer sensor signals, a drift of a sensor may be detected. It may also be advantageous to use methods for evaluating sensor signals that are not known at the time a sensor signal is generated. For example, it may be possible to extract or compute properties of the railcar or its load that generated the original sensor signals such as the type of load (liquid or solid), distribution of the load over the length of the railcar, imbalance of the wheels, vibrations and/or the distance of the rails. Thus, the advantage of transmitting primary data may be that no information is lost compared to a sensor that transmits processed or evaluated sensor signals, for example in the form of single values. In an alternative embodiment of the invention, sensor signals are amplified before being transmitted. This may have the advantage of improving the signal-to-noise ratio of the sensor signals. In another preferred method, the sensor signals are converted from analog to digital form in the sensor.

In a preferred embodiment, the DMA stores metadata associated with the sensor signals. Metadata is any additional information generated by the sensors and/or additional electronic components of a sensor and/or the DMA. Metadata can for example include a time stamp for recording the time when a sensor signal was generated by a sensor or when a sensor signal was received by the DMA. Preferred metadata can include a geotag. A geotag contains information about the geographical location of a sensor. Other preferred metadata may contain information about the identity of a rail vehicle, the cargo of a rail vehicle, visual or audible information on the rail vehicle, information from the surroundings of the sensor like temperature, air pressure, other climatic information or any other information. Saving metadata associated with the sensor signals may allow creating more detailed or other measurement results from sensor signals. For example, a geotag and time stamp may be combined to calculate an average velocity of a rail vehicle. Metadata may originate from any type of sensor that feeds it signals into the DMA. It may be synchronized to the sensor data or not. Preferably, metadata is received by the DMA in the same way as sensor signals are received. It is preferred that metadata is also stored by the DMA in the memory.

In a preferred embodiment, the memory of the data management arrangement is adapted to store measurement results. This has the advantage that each measurement may be stored and made available for displaying measurements to a user. Also it allows using measurement results for the evaluation of sensor signals. In a preferred embodiment, measurement results can be evaluated by combining and/or comparing two or more measurement results with each other. It is preferred that the DMA stores measurement results for at least two weeks, more preferably for more than a month, even more preferably for more than a year. It is preferred that also sensor signals are stored for more than two weeks, more preferably for more than a month, even more preferably for more than a year. Storing sensor signals and/or measurement results advantageously allows to access those signals and/or measurement results for further evaluation and/or analysis.

In a preferred embodiment, the data management arrangement comprises a transmitter adapted to transmit a measurement result to an external receiver. A preferred transmitter sends results through a network. A preferred network is an internet network, a cellular data network or a telephone network or any other network suitable to transmit data.

In a preferred embodiment, the measurement results can be sent to a customer and/or operator of a rail vehicle. For example, the weight of a rail car is measured at two measurement sites along a rail track and the DMA evaluates the weights of the rail car at each measurement site. If a weight difference of the rail vehicle larger than a pre-defined threshold is detected, the DMA can send a warning signal to the conductor of the train, informing the conductor that possibly cargo of the train was lost between two measurements.

In a preferred embodiment of the data acquisition and management system (DAMS), at least one sensor comprises a local interface adapted to facilitate a local read-out of sensor signals. Preferably this local read-out is implemented as a serial bus interface such a USB or RS232 connection or as a parallel bus such as GPIB. More preferably the data is read out locally using wireless connections such as Bluetooth or WLAN. This may have the advantage that in case of a malfunctioning transmission of sensor signals to the DMA, the sensor signals can still be read out locally.

In a preferred embodiment of the invention at least one sensor comprises a signal manipulator adapted to amplify the sensor signals and/or convert the sensor signals from analog to digital form. It is preferred that a sensor signal is amplified before it is sent to the DMA. This has the advantage that also initially weak signals can be transmitted. Another advantage may be that a preferred amplifier can improve the signal-to-noise ratio of the signal. In another preferred embodiment, analog sensor signals are converted to digital form (A/D-conversion) before being transmitted to the DMA. In an alternative embodiment, the DMA is adapted to amplify and/or convert the data after being received by the DMA. Preferred data manipulators do not change the character of the signals. Amplified and/or A/D-converted primary data may still be considered as primary data. In a preferred embodiment of the invention, the sensor comprises means to fit an analytical function to a sensor signal, for example a sinus function or an exponential function. The transmitted set of data points then contains the resulting parameters of the fit. Since such an analytical function still represents the original time dependent evolution of the measured physical property and allows for ex post extraction of measurement results from its parameters such as frequency, amplitude, damping of the amplitude, frequency spectrum and/or other parameters, such an analytical function may still be considered as primary data.

In a preferred embodiment of the invention the distance between any of the sensors and the data management arrangement is greater than 1 km, more preferably 10 km. The distance between a sensor and the DMA is defined as the shortest air-line distance between the sensor and the DMA. More preferably, the distance is larger than 100 km, even more preferably the distance is larger than 1000 km. A preferred DAMS is adapted to manage data coming from sensors distributed in an entire national rail network, more preferred in a continent-wide rail network, even more preferred in a world-wide rail network. A large distance between sensors and DMA has the advantage to allow operating a DAMS in very large rail networks with large distances between the sensors and the DMA. An alternative embodiment of the DAMS may also comprise more than one DMA which can function as a backup system or to increase the processing power for the evaluation of sensor signals. In another alternative embodiment of the invention the distance between any of the sensors and the DMA is shorter than 10 km, preferably shorter than 1 km. It is preferred that the DMA is stationary in the sense that during operation it is not moving. In an alternative embodiment the DMA is mobile in the sense that its location can be changed, for example when a laptop is used as a DMA.

In a preferred embodiment of the invention the shortest distance between two sensors is greater than 10 m. According to the invention, the distance between two sensors is the shortest air-line distance between two sensors. It is preferred that the distance between two or more sensors is greater than 10 m, more preferably the distance between any pair of two sensors is greater than 10 m. In another preferred embodiment the shortest distance between two sensors is greater than 50 m, even more preferred is a distance of more than 100 m. In order to reliably measure the weight of individual rail vehicles and/or each rail vehicle in a train, sensors may have to be placed at distances larger than the shortest distance between two wheel sets of a rail vehicle. The aforementioned distances advantageously allow measuring the weight of rail vehicles accurately. Another advantage of having a minimum distance between two sensors as laid out above may be the minimization of cross-talk between sensors. Therefore it may be easier to obtain independent measurements of the weight of a rail vehicle. In an alternative embodiment of the invention, the shortest distance between two sensors is shorter than 10 m.

In a preferred embodiment of the invention, at least one sensor is adapted to measure change of a magnetic property of a rail caused by the rail vehicle bearing on the rail. It is preferred that the sensor's working principle is based on the inverse magnetostrictive effect, also called Villari effect. It is preferred to exploit this effect in combination with ferromagnetic rails. It is preferred that such a sensor is mounted using permanent magnets and/or electro magnets, preferably directly to a lateral surface of a rail or to a support structure of a rail. A preferred support structure is made from a ferromagnetic material. In an alternative embodiment, at least one sensor is a strain gauge sensor. A preferred strain gauge sensor is mounted laterally to a rail or a base of the rail. This type of sensor measures the bending or elongation of a rail caused by the weight or load of a rail vehicle. In another preferred embodiment, at least one sensor measures the pressure exerted onto a rail. A preferred sensor can be installed in the sleepers or the base of the rail. In another preferred embodiment, at least one sensor is positioned at a freely moving partition of a rail track so that the vertical displacement of the track is measured in order to determine the weight of a rail vehicle. An example of a preferred strain sensor comprises an optical fiber that comprises one or more fiber Bragg gratings. In such an embodiment, it is very simple to combine transmitter, sensor and a data connection in a compact module. In another preferred embodiment of the invention at least one sensor is adapted to measure deformations of the rail, either from the load of a rail vehicle bearing on the rail or thermal expansion or contraction of the rail for example due to changing temperature. A preferred sensor is adapted to measure a torque applied to the rail by a moving rail vehicle. Another preferred sensor is adapted to measure the compression of the rail from the weight of a rail vehicle bearing on the rail, wherein the weight can be a combination of static and/or dynamic forces acting on the rail from the heavy and/or inert mass of the rail vehicle. Another preferred sensor measures the acceleration of the rail. Such a sensor, for example an accelerometer, can advantageously detect vibrations in the rail caused by rail vehicles or seismic activity.

In a preferred embodiment of the invention, at least one sensor comprises a local memory adapted to store sensor signals locally. This has the advantage of providing a backup memory in case a transmitted sensor signal gets lost, for example due to a failure of the transmitter or the data connection to the DMA. In a preferred embodiment, such a memory is used as a cache in which sensor signals are stored. It is preferred that sensor signals are cached in memory with a time stamp. It is preferred that cached sensor signals are later sent In burst transmissions in order to limit energy consumption or in order to evade eavesdropping. In a preferred embodiment, sensor signals are sent only in fixed time intervals or at fixed times, preferably once per hour, even more preferred only once per day and/or only, for example, at 12 noon. This may save energy and in case of battery powered sensors may lengthen the period between renewals of batteries. In another preferred embodiment, the DMA polls and/or pulls stored sensor signals from the memory of a sensor. This has the advantage that the DMA may initiate the signal transfer and the reception of the sensor signals can instantly be verified by the DMA. In a preferred embodiment, signal transfer from sensors to the DMA is carried out sequentially, for example if a large number of sensors deliver signals to the DMA, it is usually not feasible to receive all signals at the same time. A preferred memory is implemented as non-volatile memory, for example flash memory, a computer hard drive, a tape recorder and/or any other means of storing sensor signals for further processing and/or transmission and/or to make sensor signals accessible to a user. Further it is preferred that all sensor signals are transmitted to the DMA with a unique code making it possible to identify which sensor generated a sensor signal.

In a preferred embodiment of the invention, at least one sensor is adapted to transmit sensor signals to the DMA in real-time. This feature advantageously allows to real-time monitor a train as it passes along different sensors. It is preferred that a time stamp is added to sensor by the DMA after receiving the data. Since no significant time delay is caused by the transmission, the time stamp of the DMA is generated very shortly after the sensor signal is sent. In an alternative embodiment, the time stamp is added to the sensor signal by the sensor itself. In this case, it may not be necessary to transmit data in real-time. This has the advantage of allowing simpler signal transmission protocols. Alternatively, the signal transmission methods described above may be used, where sensor signals are sent in bursts to the DMA or polled or pulled by the DMA. In a preferred embodiment of the invention, the entire time-evolution of a sensor signal is recorded in real-time. This means that each data point of a signal is sent by a sensor in real-time. Preferably, each data point is also received by the DMA in real-time.

In a preferred embodiment of the invention, at least one sensor is adapted to receive sensor signals from another sensor and transmit the sensor signals to the data management arrangement. This method allows sending data from a sensor to the DMA by relaying the sensor signals at an intermediate sensor. This method may allow establishing a connection between a sensor and the DMA when a direct connection is not feasible, for example due to a remote location of the sensor. A preferred sensor, used to relay sensor signals, comprises a local memory and preferably a receiver for the data in addition to the transmitter. It is preferred that in a group of two or more sensors, arranged at a measurement site, one sensor is adapted to receive and transmit the sensor signals of all sensors in that measurement site. In another preferred embodiment, a dedicated device, in the following referred to as a "hub", is arranged in a measurement site for receiving sensor signals from the sensors and transmitting sensor signals to the DMA. It can be an achievable advantage of this embodiment that each sensor only needs to transmit signals to the hub. The hub, adapted to receive signals from the sensors and send them to the DMA can be optimized for that task and preferably comprise more powerful and/or reliable means for transmitting the sensor signals. A preferred hub further comprises memory means, that advantageously allow the hub to cache and/or store sensor signals before transmitting them to the DMA.

In a preferred method for measuring the weight of a moving train comprising at least one rail car of unknown weight and a locomotive of known weight which is pushing or pulling the train, a single weight sensor is arranged at a rail carrying the train, and the method comprises a step in which the weight of the rail car of unknown weight is calculated by comparing the sensor signal generated by said rail car with the sensor signal generated by the locomotive of known weight. This way, the sensor signal caused by the locomotive is effective used to calibrate the sensor since the sensor signal caused by a known mass is compared to a sensor signal caused by an unknown mass.

In a preferred embodiment of the invention, the sensors communicate with the DMA through a network. A preferred network comprises one or more elements of the following list: internet-based information network; parallel or serial bus; cellular radio system-based information network. Preferably the network is implemented using a combination of aforementioned elements. In a preferred embodiment, a parallel bus is adapted as a GPIB interface. In another preferred embodiment, a serial bus such as USB or RS232 is implemented. Preferred embodiments implement networks using a cellular radio network such as GSM, UMTS or LTE (second, third or fourth generation mobile networks). More preferred are networks in the form of internet networks. A preferred internet network is implement using optical fiber network cables and/or copper cables. Here an advantage may lie in the fact that these cellular and internet networks are commercially available and do not need to be designed specifically for the DAMS.

In a preferred method for evaluation of sensor signals, the measurement results obtained from combining and/or comparing at least two data points from one or more stored sensor signals comprises one or more of the following: count of axles of a rail vehicle, imbalance of the load distribution in a rail vehicle, mechanical wear of wheels of a rail vehicle, count of rail vehicles in a train, weight information about a rail vehicle, velocity information about a rail vehicle, change of weight information about a rail vehicle, arrival time of a rail vehicle at a location of a sensor, and a calibration function. Also, more complex calculations may be carried out by the DMA. Calibrating a sensor can be very time consuming and it may be necessary to repeat the calibration at regular intervals. Central evaluation of the primary data allows comparing the results and/or data points obtained from different sensors for the same rail vehicle. This way, systematic errors can be eliminated. For example it could be detected that a specific sensor always generates a signal that has a lower value than a signal from another sensor.

It is preferred that one or more sensors are combined into a measuring device. A preferred measuring device comprises one or more electronic circuits, for example for signal amplification and/or conversion of analog to digital signals and a transmitter. Typically sensors of one measuring device react to the same event, for example a rail car passing by at a given point in time. The same rail car passing by a measuring device at two different points in time will cause two different events. A typical embodiment of a measuring device comprises four sensors in two separate housings. Preferably, the two housings are arranged at a rail track, one housing on each rail of the rail track. Preferably the housings are arranged on a thought line perpendicular to the rails of the rail track.

### Brief description of the drawings

The invention is illustrated in greater detail with the aid of a schematic drawing.
- Figure 1:: Fig. 1 illustrates the details of the method for evaluation of sensor signals.
- Figure 2:: Fig. 2 shows an implementation of a data acquisition and management system in a transport rail system according to an embodiment of the invention.

### Detailed description of the embodiments of the invention

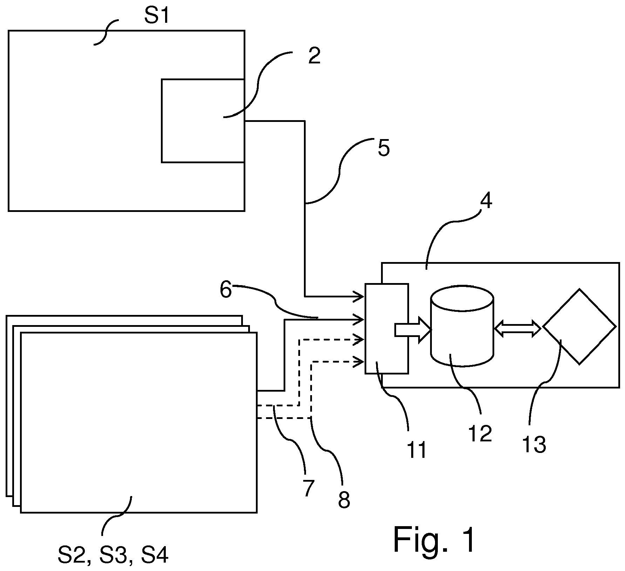

Fig 1 illustrates the method for evaluation of sensor signals. Depicted are four sensors S1, S2, S3, S4 adapted to measure the deformation of a rail caused by the load of a rail vehicle bearing on the rail, and the data management arrangement (DMA) 4. Sensor S1 is shown in more detail. It comprises a transmitter 2 adapted to transmit sensor signals to the DMA 4. The four sensors transmit sensor signals to the DMA 4 through wired 5, 6 or wireless 7, 8 data connections. The DMA 4 comprises a receiver 11 adapted to receive sensor signals from the four sensors, a memory 12 for storing received sensor signals and a processor 13 for evaluating stored sensor signals. Also measurement results are stored in the memory 12.

Sensor S1 is mounted to a rail (not shown) which is part of a transport rail system. Sensor S1 is adapted to measure a change of a magnetic property of the rail depending on the deformation of the rail caused by a load bearing on the rail. A locomotive pulling a set of cargo rail cars is traveling along the railway track. In the event that the locomotive of known weight passes the sensor S1, a signal is generated and transmitted to the DMA 4. The DMA 4 receives the signal and stores it in the memory 12. The sensor signal is proportional to the deformation of the rail and is represented by a plurality of data points generated during the event. The sampling rate is 1 kHz, meaning that 1000 data points are generated each second. In addition to the primary data, the signal contains metadata about the time of measurement, the location of the sensor and the identity of the train. After the locomotive, the rail cars pass the sensor and generate similar signals, each signal comprising primary data and metadata. The processor 13 of the DMA 4 evaluates the signals by calculating the weight of each vehicle, the count of axles, the vibrations in the rails and other measurement results of interest from the sensor signals. The calibration of the sensor S1 for use as a weight sensor is confirmed by comparing the result of the weight measurement of the locomotive to known weight of the locomotive. This calibration is then used to determine the weights of each cargo rail car.

One hundred kilometers further down the track another sensor S2 is mounted to track in a similar way as sensor S1. The same measurement procedure as for sensor S1 is repeated. After the measurement is finished, the results of S2 are compared to the results of S1 in the DMA 4. First the calibration of the two sensors is confirmed by comparing the two measurements on the locomotive from the two sensors S1 and S2. Then the signals generated by the weights of the rail cars are compared. A weight difference of a rail car may indicate the loss of cargo. In that case the DMA 4 can send a message, e.g. in form of an SMS, to the conductor of the train, warning him that cargo was lost. From the metadata, the DMA 4 calculates the travel time of the train by comparing the time stamps associated with the sensor signals for the locomotive at S1 and S2. Since the distance between the two sensors S1 and S2 is known, also an average velocity can be calculated. All calculated results are again stored in the memory 12 along with the initial sensor signals which may be used again in the future for comparing sensor signals and detecting a possible drift or malfunction of a sensor.

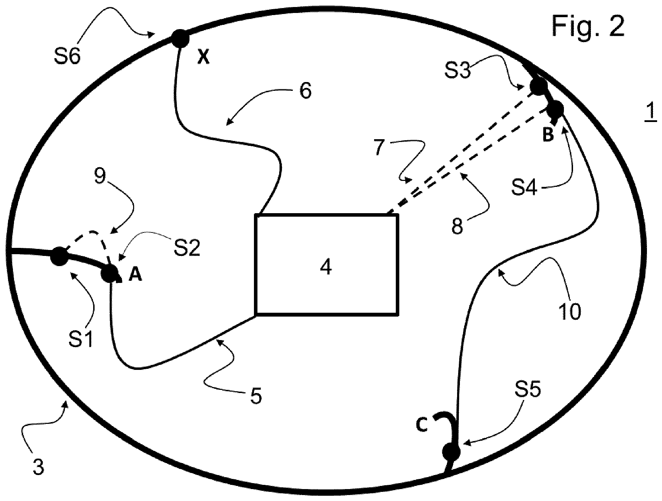

Fig. 2 shows an embodiment of a data acquisition and management system (DAMS) 1 in a transport rail system according to the invention. The schematic drawing is not to scale. The depicted DAMS 1 is capable of measuring a deformation of a rail caused by the load generated by a rail vehicle traveling along the rail. The generated signal can comprise information about different physical properties of a rail vehicle such as its mass, an imbalance of its wheels or vibrations caused in the rails or the vehicle. For this purpose, it has six sensors S1 to S6 mounted to a rail 3 for measuring, inter alia, the weight of the rail vehicle. Here, the rail 3 is a ferromagnetic rail of a basically circular railroad track. In this embodiment the rail vehicle is a train set (not shown) comprising hopper cars which transport coal. The coal originates from the coal mine marked C and is to be transported via the circular railroad track to the coal processing sites A and B. The three measurement sites A, B and C are located at track turnouts of the circular railroad track. An intermediate measurement site X is to be discussed later. Each measurement site comprises one or more of the sensors S1 to S6 for measuring the weight of a rail vehicle. In this case the sensors S1 to S5 at the measurement sites A, B and C are adapted to measure a change of a magnetic property caused by the bending of the ferromagnetic rail under the load bearing on the rail. The underlying physical effect for this change is called inverse magnetostrictive effect. The sensor S6 at the measurement point X is a strain gauge type sensor, measuring the mechanical deformation of the rail 3 directly. Furthermore, each sensor S1 to S6 is adapted to produce sensor signals in the form of primary data by providing an electric current dependent on the load bearing on the rail and to convert the electric current into a signal which can be transmitted to a central data management arrangement (DMA) which is explained later.

The distance between sites A, B and C is approximately 80 kilometers each, measured along the course of the track, and approximately 50 kilometers air-line distance. The distance between the two sensors S1 and S2 at measurement site A is 15 meters. The track bed at that site is rather stiff. Therefore, it is advantageous to measure the bending of the rail 3 under a load over a longer section of the rail 3 in order to have an accurate measurement. At measurement site B the railroad track is laid onto a muddy ground surface which is rather soft. Therefore, since a shorter section of rail 3 will already experience sufficient bending, the distance between the two sensors S3 and S4 is just 2 meters. The DAMS 1 comprises a central data management arrangement (DMA) 4. The DMA is distanced more than 10 kilometers from each of the measurement sites A, B, C and X. Four of the sensors mounted to the rail 3, the sensors S2, S3, S4 and S6, comprise transmitters which send data through a data transfer connection to said DMA 4. A data transfer connection allows sending sensor signals from a sensor to the DMA. According to the embodiment, a data transfer connection between sensor S2 at site A and the DMA is established via a first wired connection 5. The DMA 4 serves as a network server in the present embodiment. Sensor S6 at measurement site X is also connected to the DMA 4 by a wired connection, which is the second wired connection 6. Both sensors, S2 and S6, are equipped with a wire terminal to which a wire can be clipped. The DMA 4 is provided with corresponding wire terminals, so that connecting the two sensors S2 and S6 with the DMA 4 becomes feasible with reduced effort.

The two sensors S3 and S4 at measurement site B each comprise means for setting up a wireless connection in order to establish a data transfer connection to the DMA 4. In the present embodiment this is done through a point-to-point radio connection interface. The DMA 4 also comprises a point-to-point radio connection interface in order to establish a data transfer connection between the two sensors S3 and S4 at measurement site B and the DMA 4. These connections are denoted first wireless connection 7 and second wireless connection 8.

Four of the sensors in the given embodiment comprise means for establishing a data transfer connection to another sensor, namely sensors S1, S2, S4 and S5. In this embodiment, the sensors S1 and S2 at measurement site A each comprise means for setting up a third wireless connection 9 in order to establish a data transfer connection between each other. In this case, the connection is a wireless LAN connection according to the 802.11 g standard. The third wireless connection 9 is used to relay primary data from sensor S1 to sensor S2 which is connected to the DMA 4 via the first wired connection 5. Thus, the connection for data communication is implemented in the form of a single data transfer connection between measurement site A and the DMA 4 even though two sensors, S1 and S2, are present at that measurement site. This demonstrates that the number of connections to the DMA 4 may be kept low, even if the number of sensors at measurement sites is increased. The sensor S2 at measurement site A, connected to the DMA 4, furthermore comprises a local memory in order to store data at the measurement site A. In this case, the local memory is a hard disk. It is used to cache primary data from both sensors S1 and S2 at measurement site A. The data is transmitted to the DMA 4 once a day after establishing a dial-up connection between sensor S2 and the DMA 4 through the first wired connection 5. Additionally, sensor S2 has a local interface adapted to allow a local read-out of data, for example in situations when the first wired connection 5 to the DMA 4 is damaged. In the present case, an RS232 serial connector is provided, so that data, especially the stored measurement data, can be copied from the hard disk of the sensor S2 to a laptop or a similar device.

At the coal mine C, the weight sensor S5 is located in a rather difficult to reach environment. Due to mountains in that region it is not possible to establish a direct wired or wireless connection between sensor S5 and the DMA 4. Furthermore, sending a maintenance team to the coal mine C can be especially difficult in cold seasons due to the high amount of snow in that area. This means that local maintenance and/or establishing a data transfer connection to the DMA 4 can be expensive and time consuming. To overcome this issue, the sensor S5 at site C comprises means for establishing a data transfer connection with another sensor, in this case sensor S4 at measurement site B. In this embodiment, sensor S5 at measurement site C establishes a connection to sensor S4 at site B via a third wired connection 10, which in this case is an optical fiber cable. Besides being connected to the DMA 4, sensor S4 comprises an optical fiber interface for establishing a connection to sensor S5 at site C. Since sensor S5 at site C does not have means for storing primary data, it transfers the primary data in real-time to sensor S4 at measurement site B. For tracking these measurements, a time-stamp is added to the primary data before passing it on via the data transfer connection 10. Additionally, each sensor adds a unique code to the transmitted signals in order to make it possible to uniquely identify which sensor generated a signal received by the DMA. Sensor S4 receives the data from sensor S3 and stores it in a cache in the form of a local flash memory. Then that primary data including the time-stamp is forwarded to the DMA 4 through the second wireless connection 8. It is therefore neither necessary to establish a direct connection to the DMA 4 nor is it needed to provide sensor S5 with means for local data read-out. This scheme allows keeping maintenance costs low.

The DMA 4, which in this embodiment is a network server, is adapted to centrally record data which it receives from the sensors S2, S3, S4 and S6. Data from sensors S1 and S5 is received indirectly. Sensors S2, S3, S4 and S6 are directly connected to the DMA 4 and form a network together with the DMA 4 that has a star-topography. Memory at the DMA 4 is facilitated by a redundant array of hard-disks (RAID1) which provides an improved protection against data loss. Thus, the DMA 4 can collect and store all the primary data of all of the sensors of the DAMS 1 at a single location. Furthermore, it is adapted to evaluate the primary data. Primary data is evaluated by executing algorithms implemented in the software of the processor of the DMA 4. In this case, the DMA 4 runs software applications that analyze the received sensor signals. Each signal typically shows an oscillating signal with several maxima and minima. The applied software extracts parameters such as the maximum amplitude and damping of the signal. By executing a Fourier transformation, the frequency spectrum of the signal is revealed. This way, different physical properties about the rail vehicle, for example its mass, its load distribution and its velocity can be calculated. Using the mass information for example, the DMA 4 software can also identify different trains traveling around the transport rail system by their specific mass. By combining the information from the location stamps and time stamps and thus arrival times of a train or a rail vehicle at sites A, B, C and X with the known distances between sites, it is possible to determine the travel time and hence, with known distance of the tracks the average speeds of those trains. Calculated measurement results are stored by the DMA and made accessible to a user who can be a customer. The results of such a calculation can be accessed by a customer via a browser-based user interface. In this embodiment, the owners of the coal mine C and the processing sites A and B have booked a basic service package that allows them to only access the weight information of sensors S1 to S6 via the browser-based user interface. By obtaining a service contract upgrade for an additional cost, the customers may also access measurement results regarding travel times and average speed of the trains. Thus, a flexible modular pricing scheme may be provided to the customer of a provider of such a DAMS 1, meeting a customer's needs for specific information.

Another service provided by the provider of the DMA 4 is the calibration of sensors newly added to the transport rail system. Thus, the DMA 4 is adapted to calibrate sensors of the transport rail system. In this embodiment, the sensor S6 at measurement site X, in this case a mechanical strain gauge sensor provided with a data transfer connection, was recently added to the system in order to provide an intermediate measuring site for trains travelling between sites A and B. This allows monitoring the average speeds of trains travelling between sites A and B with increased precision. Sensor S6 at measurement site X is directly connected to the DMA 4 via the second wired connection 6. After sensor S6 is installed in the DMA at site X, it needs to be calibrated, which means that a certain mechanical deformation of the rail 3 has to be linked to a certain load on the rail 3. In conventional transport rail systems, a service team would have to calibrate the sensor S6 locally, which can be time consuming and increase maintenance costs. With the DMA 4 present, remote calibration becomes possible. For example, a train leaving the coal mine C passes sensor S5 at the DAA of site C. The primary data is then sent to the DMA 4 via the third wired connection 10, sensor S4 at site B and the second wireless connection 8. Then the DMA 4 calculates the mass of train which results to be 2000 tons. At a later stage the same train passes the measurement site X and the uncalibrated sensor S6 sends primary data to the DMA 4. Using the previously calculated mass of the train, a calibration function for sensor S6 can be generated centrally at the DMA 4. Thus, calibration of newly added sensors becomes possible without the need to have a local calibration team on site. Another method of calibration involves the use of a rail vehicle of known mass. This can be an electric locomotive which has a very stable mass or a diesel powered locomotive with a known amount of fuel on board. For example, a train set with an electric locomotive and several coal hoppers passes a measurement site with one sensor. A first set of sensor signals is generated when the locomotive passes the sensor. The DMA 4 receives the signals and stores them as the reference signals. Then, for each coal hopper sensor signals are generated and sent to the DMA 4. Those signals are also stored by the DMA 4. The first set of sensor signals can be used to create a calibration function for the sensor since the mass of the locomotive is known. Then the DMA 4 evaluates the signals from the measurements of the coal hoppers by comparing the corresponding sensor signals with the sensor signals of the locomotive. This way the mass of the coal hoppers can be calculated. Those measurement results are then also stored in the memory of the DMA 4.

Typically it is necessary to perform more than one measurement in order to calibrate a sensor since slope and offset of the calibration function have to be determined. Using the DAMS 1, this can be repeated with historic data since all sensor signals are recorded and can be logged along with secondary data or metadata identifying the train or rail vehicle. Comparing the results from different sensors can further improve the calibration and makes it possible to identify malfunctioning sensors when large discrepancies between measurements are detected, for example if three out of four measurement sites report a weight of 2000 tons and the fourth measurement site reports a weight of 2700 tons.

The embodiment described above and depicted in Fig. 1 demonstrates some of the advantages that can be reached by implementing a DAMS 1 in a transport rail system that is capable of detecting a plurality of different physical property of a rail vehicle according to the invention. For example, measurement data may be transferred or exchanged via data transfer connections between different sensors S1, S2, S4 and S5 and/or sensors S2, S3, S4 and S6 and a DMA 4. In addition, calculations may be performed centrally at the DMA 4 based on the collected sensor signals. Furthermore, the calibration of sensors S1 to S6 may be simplified so that maintenance costs may be reduced. This allows providing a highly interconnected measuring system which can be exploited commercially in many different aspects while keeping costs at the measurement sites low as the sensors at each site are of reduced technical complexity.

The features described in the above description, claims and figures can be relevant to the invention in any combination. Their reference numerals in the claims have merely been introduced to facilitate reading of the claims. They are by no means meant to be limiting.

### List of reference numerals

- 1: Data acquisition and management system (DAMS)
- S1,2,3,4,5,6: Sensors
- A, B, C, X: Measurement sites
- 2: Transmitter
- 3: Rail
- 4: Data management arrangement (DMA)
- 5: First wired connection
- 6: Second wired connection
- 7: First wireless connection
- 8: Second wireless connection
- 9: Third wireless connection
- 10: Third wired connection
- 11: Receiver
- 12: Memory
- 13: Processor

## Claims

1. Method for generating measurement results
from sensor signals generated by one or more separate sensors (S1, S2, S3, S4, S5, S6),
each sensor signal comprising two or more data points, which data points are from the same event of a rail vehicle, the event being a train-event, a car-event and/or a wheel-event, which respectively occur when a train, a car or locomotive or one or more wheels of one axle passes by a sensor,
the sensors each (S1, S2, S3, S4, S5, S6) being arranged at a rail (3) adapted to carry a rail vehicle,
the sensors (S1, S2, S3, S4, S5, S6) being adapted to measure a physical property of the rail (3), and
the sensors (S1, S2, S3, S4, S5, S6) each comprising a transmitter (2) adapted to transmit generated sensor signals to
a physically distanced data management arrangement (4), the distance between any of the sensors (S1, S2, S3, S4, S5, S6) and the data management arrangement (4) being greater than 10 km and the data management arrangement (4) comprising a receiver (11) adapted to receive sensor signals,
a processor (13) adapted to evaluate sensor signals, and
a memory (12),
the method comprising the steps of
receiving the sensor signals and
evaluating the sensor signals,
wherein the data management arrangement (4) stores the received sensor signals in the memory (12) and the evaluation comprises a step of combining and/or comparing at least two data points from one or more stored sensor signals with each other.

2. Method according to claim 1, **characterized in that**
the evaluation of the sensor signals in the data management arrangement (4) comprises a step in which two or more data points are combined and/or compared with each other, wherein the two or more data points are from sensor signals that were generated in different points in time.

3. Method according to claim 1 or 2, **characterized in that** at least one of the at least two data points of stored sensor signals which are compared and/or combined with each other was generated by a calibrated sensor.

4. Method according to a preceding claim, **characterized in that** the data management arrangement (4) receives sensor signals as primary data.

5. Method according to a preceding claim, **characterized in that** the data management arrangement (4) stores metadata associated with the sensor signals.

6. Method according to a preceding claim, **characterized in that** in at least one sensor the transmitter (2) is adapted to transmit the generated sensor signals to the data management arrangement (4) via another sensor or a hub.

7. Data acquisition and management system (1) adapted to generate measurement results from sensor signals and comprising one or more separate sensors (S1, S2, S3, S4, S5, S6) that generate the sensor signals and a data management arrangement (4),
each sensor signal comprising two or more data points, which data points are from the same event of a rail vehicle, the event being a train-event, a car-event and/or a wheel-event, which respectively occur when a train, a car or locomotive or one or more wheels of one axle passes by a sensor,
each sensor being arranged at a rail (3) adapted to carry a rail vehicle,
the sensors (S1, S2, S3, S4, S5, S6) being adapted to measure a physical property of the rail (3), and
the sensors (S1, S2, S3, S4, S5, S6) each comprising a transmitter (2) adapted to transmit sensor signals to the data management arrangement (4), physically distanced from the sensors (S1, S2, S3, S4, S5, S6), the distance between any of the sensors and the data management arrangement being greater than 10km, and comprising a receiver (11) adapted to receive sensor signals,
a processor (13) adapted to evaluate sensor signals, and
a memory (12),
wherein the data management arrangement (4) is adapted to store received sensor signals in the memory (12) and evaluate the stored sensor signals by combining and/or comparing at least two data points of one or more sensor signals with each other.

8. Data acquisition and management system according to claim 7 **characterized in that** at least one sensor (S1, S2, S3, S4, S5) is adapted to measure a change of a magnetic property of a rail (3) caused by a rail vehicle bearing on the rail (3).

9. Data acquisition and management system according to claim 7 or 8, **characterized in that** the memory (12) of the data management arrangement (4) is adapted to store measurement result.

10. Data acquisition and management system according to one of claims 7 to 9, **characterized in that** the data management arrangement (4) comprises a transmitter adapted to transmit a measurement result to an external receiver.

11. Data acquisition and management system according to one of claims 7 to 10, **characterized in that** at least one sensor (S2) comprises a local interface adapted to facilitate a local read-out of sensor signals.

12. Data acquisition and management system according to one of claims 7 to 11, **characterized in that** at least one sensor (S1, S2, S3, S4, S5, S6) comprises a signal manipulator adapted to amplify the sensor signals and/or convert the sensor signals from analogue to digital form.

13. Data acquisition and management system according to one of claims 7 to 12, **characterized in that** the distance between any of the sensors (S1, S2, S3, S4, S5, S6) and the data management arrangement (4) is greater than 10 km.

14. Data acquisition and management system according to claims 7 to 13, **characterized in that** the distance between two sensors (S1, S2) is greater than 10 m.

15. Data acquisition and management system according to one of claims 7 to 14, **characterized in that** at least one sensor (S2, S4) comprises a local memory (12) adapted to store sensor signals locally.

16. Data acquisition and management system according to one of claims 7 to 15, **characterized in that** at least one sensor (S5) is adapted to transmit sensor signals to the data management arrangement (4) in real-time.

17. Data acquisition and management system according to one of claims 7 to 16, **characterized in that** at least one sensor (S4) is adapted to receive sensor signals from another sensor (S5) and transmit the sensor signals to the data management arrangement (4).

18. Data acquisition and management system according to one of claims 7 to 17, **characterized in that** in at least one of the sensors the transmitter (2) is adapted to transmit the generated sensor signals to the data management arrangement (4) via another sensor or a hub.

## Patentansprüche

1. Verfahren zum Erzeugen von Messergebnissen
aus von einem oder mehreren separaten Sensoren (S1, S2, S3, S4, S5, S6) erzeugten Sensorsignalen,
wobei jedes Sensorsignal zwei oder mehr Datenpunkte umfasst, wobei diese Datenpunkte von demselben Ereignis eines Schienenfahrzeugs stammen,
wobei es sich bei dem Ereignis um ein Zugereignis, ein Wagenereignis und/oder ein Radereignis handelt,
welche jeweils auftreten, wenn ein Zug, ein Wagen oder Lokomotive oder ein oder mehrere Räder einer Achse einen Sensor passieren,
wobei jeder der Sensoren (S1, S2, S3, S4, S5, S6) an einer Schiene (3) angeordnet ist, die dazu ausgelegt ist, ein Schienenfahrzeug zu tragen,
wobei die Sensoren (S1, S2, S3, S4, S5, S6) dazu ausgelegt sind, eine physikalische Eigenschaft der Schiene (3) zu messen, und
wobei jeder der Sensoren (S1, S2, S3, S4, S5, S6) einen Sender (2) umfasst, der dazu ausgelegt ist, erzeugte Sensorsignale an eine physikalisch entfernte Datenmanagementvorrichtung (4) zu übertragen, wobei die Entfernung zwischen irgendeinem der Sensoren (S1, S2, S3, S4, S5, S6) und der Datenmanagementvorrichtung (4) größer als 10 km ist und die Datenmanagementvorrichtung (4) aufweist
einen Empfänger (11), der dazu ausgelegt ist, Sensorsignale zu empfangen,
einen Prozessor (13), der dazu ausgelegt ist, Sensorsignale auszuwerten, und
einen Speicher (12),
wobei das Verfahren die Schritte umfasst
Empfangen der Sensorsignale und
Auswerten der Sensorsignale,
wobei die Datenmanagementvorrichtung (4) die empfangenen Sensorsignale im Speicher (12) speichert und die Auswertung einen Schritt des miteinander Kombinierens und/oder Vergleichens von mindestens zwei Datenpunkten von einem oder mehreren gespeicherten Sensorsignalen umfasst.

2. Verfahren gemäß Anspruch 1, **dadurch gekennzeichnet, dass** die Auswertung der Sensorsignale in der Datenmanagementvorrichtung (4) einen Schritt umfasst, in dem zwei oder mehr Datenpunkte miteinander kombiniert und/oder verglichen werden, wobei die zwei oder mehr Datenpunkte von Sensorsignalen sind/stammen/herrühren, die zu verschiedenen Zeitpunkten erzeugt wurden.

3. Verfahren gemäß Anspruch 1 oder 2, **dadurch gekennzeichnet, dass** zumindest einer der mindestens zwei Datenpunkte von gespeicherten Sensorsignalen, die miteinander verglichen und/oder kombiniert werden, von einem kalibrierten Sensor erzeugt wurde.

4. Verfahren gemäß einem vorhergehenden Anspruch, **dadurch gekennzeichnet, dass** die Datenmanagementvorrichtung (4) Sensorsignale als Primärdaten empfängt.

5. Verfahren gemäß einem vorhergehenden Anspruch, **dadurch gekennzeichnet, dass** die Datenmanagementvorrichtung (4) mit den Sensorsignalen assoziierte Metadaten speichert.

6. Verfahren gemäß einem vorhergehenden Anspruch, **dadurch gekennzeichnet, dass** in mindestens einem Sensor der Sender (2) dazu ausgelegt ist, die erzeugten Sensorsignale über einen weiteren Sensor oder ein Hub an die Datenmanagementvorrichtung (4) zu übertragen.

7. Datenerfassungs- und -managementsystem (1), das dazu ausgelegt ist, aus Sensorsignalen Messergebnisse zu erzeugen und das einen oder mehrere separate Sensoren (S1, S2, S3, S4, S5, S6), die die Sensorsignale erzeugen, und eine Datenmanagementvorrichtung (4) umfasst,
wobei jedes Sensorsignal zwei oder mehr Datenpunkte umfasst, wobei diese Datenpunkte von demselben Ereignis eines Schienenfahrzeugs stammen,
wobei es sich bei dem Ereignis um ein Zugereignis, ein Wagenereignis und/oder ein Radereignis handelt, die jeweils auftreten, wenn ein Zug, ein Wagen oder Lokomotive oder ein oder mehrere Räder einer Achse einen Sensor passieren,
wobei jeder Sensor an einer Schiene (3) angeordnet ist, die dazu ausgelegt ist, ein Schienenfahrzeug zu tragen,
wobei die Sensoren (S1, S2, S3, S4, S5, S6) dazu ausgelegt sind, eine physikalische Eigenschaft der Schiene (3) zu messen, und
wobei jeder der Sensoren (S1, S2, S3, S4, S5, S6) einen Sender (2) umfasst, der dazu ausgelegt ist, Sensorsignale an die Datenmanagementvorrichtung (4) zu übertragen, die von den Sensoren (S1, S2, S3, S4, S5, S6) physikalisch entfernt ist, wobei die Entfernung zwischen irgendeinem der Sensoren und der Datenmanagementvorrichtung (4) größer als 10 km ist, und die aufweist
einen Empfänger (11), der dazu ausgelegt ist, Sensorsignale zu empfangen,
einen Prozessor (13), der dazu ausgelegt ist, Sensorsignale auszuwerten, und
einen Speicher (12),
wobei die Datenmanagementvorrichtung (4) dazu ausgelegt ist, empfangene Sensorsignale in dem Speicher (12) zu speichern und die gespeicherten Sensorsignale durch miteinander Kombinieren und/oder Vergleichen von mindestens zwei Datenpunkten von einem oder mehreren Sensorsignalen auszuwerten.

8. Datenerfassungs- und -managementsystem nach Anspruch 7, **dadurch gekennzeichnet, dass** mindestens ein Sensor (S1, S2, S3, S4, S5) dazu ausgelegt ist, eine Änderung einer magnetischen Eigenschaft einer Schiene (3) zu messen, die durch ein die Schiene (3) belastendes Schienenfahrzeug verursacht ist.

9. Datenerfassungs- und -managementsystem nach Anspruch 7 oder 8, **dadurch gekennzeichnet, dass** der Speicher (12) der Datenmanagementvorrichtung (4) dazu ausgelegt ist, Messergebnisse zu speichern.

10. Datenerfassungs- und -managementsystem nach einem der Ansprüche 7 bis 9,
**dadurch gekennzeichnet, dass** die Datenmanagementvorrichtung (4) einen Sender umfasst, der dazu ausgelegt ist, ein Messergebnis an einen externen Empfänger zu übertragen.

11. Datenerfassungs- und -managementsystem nach einem der Ansprüche 7 bis 10, **dadurch gekennzeichnet, dass** mindestens ein Sensor (S2) eine lokale Schnittstelle umfasst, die dazu ausgelegt ist, ein lokales Auslesen von Sensorsignalen zu erleichtern.

12. Datenerfassungs- und -managementsystem nach einem der Ansprüche 7 bis 11, **dadurch gekennzeichnet, dass** mindestens ein Sensor (S1, S2, S3, S4, S5, S6) eine Signalverarbeitung umfasst, der dazu ausgelegt ist, die Sensorsignale zu verstärken und/oder die Sensorsignale von analoger in digitale Form umzuwandeln.

13. Datenerfassungs- und -managementsystem nach einem der Ansprüche 7 bis 12, **dadurch gekennzeichnet, dass** die Entfernung zwischen irgendeinem der Sensoren (S1, S2, S3, S4, S5, S6) und der Datenmanagementvorrichtung (4) größer als 10 km ist.

14. Datenerfassungs- und -managementsystem nach einem der Ansprüche 7 bis 13, **dadurch gekennzeichnet, dass** die Entfernung zwischen zwei Sensoren (S1, S2) größer als 10 m ist.

15. Datenerfassungs- und -managementsystem nach einem der Ansprüche 7 bis 14, **dadurch gekennzeichnet, dass** mindestens ein Sensor (S2, S4) einen lokalen Speicher (12) umfasst, der dazu ausgelegt ist, Sensorsignale lokal zu speichern.

16. Datenerfassungs- und -managementsystem nach einem der Ansprüche 7 bis 15, **dadurch gekennzeichnet, dass** mindestens ein Sensor (S5) dazu ausgelegt ist, Sensorsignale in Echtzeit zu der Datenmanagementvorrichtung (4) zu übertragen.

17. Datenerfassungs- und -managementsystem nach einem der Ansprüche 7 bis 16, **dadurch gekennzeichnet, dass** mindestens ein Sensor (S4) dazu ausgelegt ist, Sensorsignale von einem weiteren Sensor (S5) zu empfangen und die Sensorsignale zu der Datenmanagementvorrichtung (4) zu übertragen.

18. Datenerfassungs- und -managementsystem nach einem der Ansprüche 7 bis 17, **dadurch gekennzeichnet, dass** in mindestens einem der Sensoren der Sender (2) dazu ausgelegt ist, die erzeugten Sensorsignale über einen weiteren Sensor oder ein Hub zu der Datenmanagementvorrichtung (4) zu übertragen.

## Revendications

1. Méthode en vue de la génération de résultats de mesures à partir des signaux de capteurs générés par un ou plusieurs capteurs séparés (S1, S2, S3, S4, S5, S6),
chaque signal de capteur comprenant deux ou plusieurs points de données, dont lesdits points de données proviennent du même évènement d'un véhicule ferroviaire, l'événement étant un événement de train, un événement de voiture et/ou un événement de roues, qui se produisent respectivement lorsqu'un train, une voiture ou une locomotive, ou une ou plusieurs roues d'un seul essieu passe par un capteur,
les capteurs étant chacun (S1, S2, S3, S4, S5, S6) disposés sur un rail (3) adapté à porter un véhicule ferroviaire,
les capteurs (S1, S2, S3, S4, S5, S6) étant adaptés à mesurer une propriété physique du rail (3), et
les capteurs (S1, S2, S3, S4, S5, S6) comprenant chacun un transmetteur (2) adapté à transmettre des signaux de capteur générés à
un dispositif de gestion des données (4) écarté physiquement, la distance entre un quelconque des capteurs (S1, S2, S3, S4, S5, S6) et le dispositif de gestion des données (4) étant supérieure à 10 km et le dispositif de gestion des données (4) comprenant un récepteur (11) adapté à recevoir des signaux de capteur,
un processeur (13) adapté à évaluer des signaux de capteur, et
une mémoire (12),
la méthode comprenant par ailleurs les étapes de :
réception des signaux de capteur et
évaluation des signaux de capteur,
dans laquelle le dispositif de gestion des données (4) stocke les signaux de capteur reçus dans la mémoire (12) et l'évaluation comprend une étape de combinaison et/ou de comparaison l'un avec l'autre d'au moins deux points de données à partir d'un seul ou de plusieurs signaux de capteur stockés.

2. Méthode selon la revendication 1, **caractérisée en ce que**
l'évaluation des signaux de capteur dans le dispositif de gestion des données (4) comprend une étape dans laquelle deux ou plusieurs points de données sont combinés et/ou comparés l'un avec l'autre, dans laquelle les deux ou plusieurs points de données proviennent des signaux de capteurs qui ont été générés à des moments donnés différents.

3. Méthode selon les revendications 1 ou 2, **caractérisée en ce qu'** au moins un des au moins deux points de données des signaux de capteur stockés qui sont comparés et/ou combinés l'un avec l'autre ont été générés par un capteur calibré.

4. Méthode selon une revendication précédente, **caractérisée en ce que** le dispositif de gestion des données (4) reçoit les signaux de capteur comme données primaires.

5. Méthode selon une revendication précédente, **caractérisée en ce que** le dispositif de gestion des données (4) stocke des métadonnées associées aux signaux de capteur.

6. Méthode selon une revendication précédente, **caractérisée en ce que**, dans au moins un capteur, le transmetteur (2) est adapté à transmettre les signaux de capteur générés au dispositif de gestion des données (4) par l'intermédiaire d'un autre capteur ou d'un axe.

7. Système d'acquisition et de gestion de données (1) adapté à générer des résultats de mesure à partir des signaux de capteur et comprenant un ou plusieurs capteurs séparés (S1, S2, S3, S4, S5, S6) qui génèrent les signaux de capteur et un dispositif de gestion des données (4),
chaque signal de capteur comprenant deux ou plusieurs points de données, dont lesdits points de données proviennent du même d'un véhicule ferroviaire, l'événement étant un de train, un de voiture et/ou un de roues, qui se produisent respectivement lorsqu'un train, une voiture ou une locomotive, ou une ou plusieurs roues d'un seul essieu passe par un capteur,
chaque capteur étant disposé sur un rail (3) adapté à porter un véhicule ferroviaire,
les capteurs (S1, S2, S3, S4, S5, S6) étant adaptés à mesurer une propriété physique du rail (3), et
les capteurs (S1, S2, S3, S4, S5, S6) comprenant chacun un transmetteur (2) adapté à transmettre des signaux de capteur générés au dispositif de gestion des données (4) écarté physiquement des capteurs (S1, S2, S3, S4, S5, S6), la distance entre un quelconque des capteurs et le dispositif de gestion des données (4) étant supérieure à 10 km et comprenant un récepteur (11) adapté à recevoir des signaux de capteur,
un processeur (13) adapté à évaluer des signaux de capteur, et
une mémoire (12),
dans laquelle le dispositif de gestion des données (4) est adapté à stocker les signaux de capteur reçus dans la mémoire (12) et à évaluer les signaux de capteur stockés en combinant et/ou en comparant au moins deux points de données d'un seul ou de plusieurs signaux de capteur stockés l'un avec l'autre.

8. Système d'acquisition et de gestion de données selon la revendication 7, **caractérisé en ce qu'**au moins un capteur (S1, S2, S3, S4, S5) est adapté à mesurer un changement d'une propriété magnétique d'un rail (3) entraîné par un véhicule ferroviaire portant sur le rail (3).

9. Système d'acquisition et de gestion de données selon les revendications 7 ou 8, **caractérisé en ce que** la mémoire (12) du dispositif de gestion des données (4) est adaptée à stocker un résultat de mesure.

10. Système d'acquisition et de gestion de données selon une quelconque des revendications 7 à 9, **caractérisé en ce que** le dispositif de gestion des données (4) comprend un transmetteur adapté à transmettre un résultat de mesure à un récepteur externe.

11. Système d'acquisition et de gestion de données selon une quelconque des revendications 7 à 10, **caractérisé en ce qu'**au moins un capteur (S2) comprend une interface locale adaptée à faciliter une lecture locale de signaux de capteur.

12. Système d'acquisition et de gestion de données selon une quelconque des revendications 7 à 11, **caractérisé en ce qu'**au moins un capteur (S1, S2, S3, S4, S5, S6) comprend un manipulateur de signal adapté à amplifier les signaux de capteur et/ou à convertir les signaux de capteur d'une forme analogique à une numérique.

13. Système d'acquisition et de gestion de données selon une quelconque des revendications 7 à 12, **caractérisé en ce que** la distance entre un quelconque des capteurs (S1, S2, S3, S4, S5, S6) et le dispositif de gestion des données (4) est supérieure à 10 km.

14. Système d'acquisition et de gestion de données selon une quelconque des revendications 7 à 13, **caractérisé en ce que** la distance entre deux capteurs (S1, S2) est supérieure à 10 m.

15. Système d'acquisition et de gestion de données selon une quelconque des revendications 7 à 14, **caractérisé en ce qu'**au moins un capteur (S2, S4) comprend une mémoire locale (12) adaptée à stocker localement des signaux de capteur.

16. Système d'acquisition et de gestion de données selon une quelconque des revendications 7 à 15, **caractérisé en ce qu'**au moins un capteur (S5) est adapté à transmettre des signaux de capteur au dispositif de gestion des données (4) en temps réel.

17. Système d'acquisition et de gestion de données selon une quelconque des revendications 7 à 16, **caractérisé en ce qu'**au moins un capteur (S4) est adapté à recevoir des signaux de capteur à partir d'un autre capteur (S5) et à transmettre les signaux de capteur au dispositif de gestion des données (4).

18. Système d'acquisition et de gestion de données selon une quelconque des revendications 7 à 17, **caractérisé en ce que**, dans au moins un des capteurs, le transmetteur (2) est adapté à transmettre les signaux de capteur générés au dispositif de gestion des données (4) par l'intermédiaire d'un autre capteur ou d'un axe.
